Europäisches Patentamt

European Patent Office

Office européen des brevets

(19)

(11) Veröffentlichungsnummer: **0 017 642**
**B1**

(12)

# EUROPÄISCHE PATENTSCHRIFT

(45) Veröffentlichungstag der Patentschrift:
**29.06.83**

(51) Int. Cl.³: **H 02 M 1/08,** H 02 M 7/155

(21) Anmeldenummer: **80890015.3**

(22) Anmeldetag: **07.02.80**

(54) **Schaltungsanordnung zur folgerichtigen Doppelimpulszündung bei einer Thyristorbrücke für beide Drehfeldrichtungen.**

(30) Priorität: **07.02.79 AT 903/79**

(43) Veröffentlichungstag der Anmeldung:
**15.10.80 Patentblatt 80/21**

(45) Bekanntmachung des Hinweises auf die Patenterteilung:
**29.06.83 Patentblatt 83/26**

(84) Benannte Vertragsstaaten:
**BE CH DE FR GB IT SE**

(56) Entgegenhaltungen:
**DE-B-1 563 385**
**DE-B-2 524 869**

(73) Patentinhaber: **ELIN-UNION Aktiengesellschaft für elektrische Industrie, Penzinger Strasse 76, A-1141 Wien (AT)**

(72) Erfinder: **Jelinek, Heinrich, Dipl.-Ing., Kopernikusgasse 6/8, A-1060 Wien (AT)**

(74) Vertreter: **Krause, Peter, Penzinger Strasse 76, A-1141 Wien (AT)**

## Schaltungsanordnung zur folgerichtigen Doppelimpulszündung bei einer Thyristorbrücke für beide Drehfeldrichtungen

Die Erfindung betrifft eine Schaltungsanordnung zur folgerichtigen Doppelimpulszündung bei einer vollgesteuerten Thyristorbrücke für beide Drehfeldrichtungen, die von der die Thyristorbrücke anspeisenden dreiphasigen Wechselspannung festgelegt sind, wobei ein Steuertransformator, drei Tiefpassfilter, drei Impuls-Steuersätze und eine Verknüpfungslogik vorgesehen sind.

Für den Startvorgang und im lückenden Betrieb benötigt eine vollgesteuerte Thyristorbrückenschaltung Doppelzündimpulse. Das bedeutet, dass zum Hauptimpuls des Thyristors ein später folgender Impuls notwendig ist, um im Zeitpunkt der Kommutierung die benötigten Thyristoren leitend zu machen. Bei einer dreiphasigen Drehstrombrücke muss daher der zweite Impuls um 60° später folgen. Bei einem rechtsdrehenden Drehfeld der anspeisenden mehrphasigen Wechselspannung, wie es die Vorschriften vorschreiben, muss z.B. bei der dreiphasigen Drehstrombrücke der Thyristor $R^+$ seinen zweiten Impuls gleichzeitig mit dem Zündimpuls des Thyristors $T^-$ bekommen. Es ist daher üblich, den Zündimpuls von $T^-$ als zweiten Impuls für $R^+$ zu verwenden. Diese sogenannte Doppelzündimpulsverknüpfung kann in einer Diodenmatrix erfolgen, welche aber nur für eine bestimmte Drehrichtung der anspeisenden mehrphasigen Wechselspannung richtig funktioniert.

Sollte die Drehfeldrichtung der anspeisenden Wechselspannung unbekannt sein, so kommt es bei falscher Doppelzündimpulsverknüpfung auf alle Fälle zu Fehlzündungen der Thyristoren, da die Doppelzündimpulse zu völlig anderen Zeitpunkten auftreten wie bei einer dreiphasigen vollgesteuerten Drehstrombrücke, z.B. 60° vor dem Zündimpuls. Dadurch funktioniert die Steuerung der gleichgerichteten Wechselspannung nicht mehr.

Bei Anlagen oder Geräten, welche vollkommen verdrahtet aufgestellt werden, muss die anspeisende mehrphasige Wechselspannung nach den Vorschriften bereits im Stecker für rechtsläufiges Drehfeld verdrahtet sein, dadurch kann die Doppelzündimpulszuordnung zur Thyristorbrücke bereits auf Rechtsdrehfeld ausgelegt sein.

Weiters ist anzunehmen, dass bei Anlagen oder Geräten, welche von Fachleuten vollkommen verdrahtet aufgestellt oder von ihnen verwendet werden, keine Fehlimpulse durch Unkenntnis der Drehfeldrichtung der anspeisenden mehrphasigen Wechselspannung oder durch unsachgemässe Handhabung zu den Thyristoren gelangen.

Wird aber nun ein Gerät oder eine Anlage mit einer vollgesteuerten Thyristorbrücke nicht im stationären Betrieb, also vollständig in eine Anlage integriert und weiterhin auch noch von Nichtfachleuten bedient, so sind Fehlfunktionen durch Unkenntnis gewisser Kriterien sehr leicht möglich. Dies ist vor allem auf Baustellen, wo man nicht annehmen kann, dass alle Anspeisungen auf den verschiedensten Steckern in einer bestimmten Drehfeldrichtung, z.B. im Rechtsdrehsinn verdrahtet sind, besonders kritisch. Es wird daher in einzelnen Anlagen zur Änderung der Drehrichtung des Drehstromfeldes ein Phasenwendeschalter vorgesehen. Mit diesem werden bei einem dreiphasigen Wechselstromnetz von Hand aus zwei Phasen vertauscht, was mit einer Änderung der Drehrichtung des Drehstromfeldes identisch ist. Diese Art der Anpassung der anspeisenden Wechselspannung an den Thyristorsatz hat jedoch den Nachteil, dass im Leistungsteil der Anlage eingegriffen werden muss und weiters erfolgt die Umschaltung nicht selbständig.

Eine andere Möglichkeit, welche am häufigsten angewendet wird, ist ganz einfach das Vorschreiben des Rechtsdrehfeldes der mehrphasigen Wechselspannung beim Anschluss der Anlage zur Gewährleistung einer fehlerfreien Funktion. Wie schon erwähnt wurde, ist dies aber auf Baustellen nicht leicht möglich bzw. oft überhaupt nicht realisierbar.

Beide letztgenannten Varianten zum Zustandekommen einer fehlerfreien Funktion einer mehrphasigen Thyristorbrücke fallen aber weg, wenn angenommen werden muss, dass das verwendete Gerät von Nichtfachleuten bedient wird und weiters nicht stationär angeschlossen ist, sondern den Standort ständig verändern muss.

Es ist der DE–A–2 830 439 bekannt, zwei Diodenmatrixen für beide Drehfeldrichtungen vorzusehen. Nachteilig ist die umfangreiche Schaltung zur Erfassung der anliegenden Drehfeldrichtung, die die entsprechende Diodenmatrix aktiviert.

Die Aufgabe der vorliegenden Erfindung liegt daher darin, eine Schaltung zu schaffen, welche die Doppelzündimpulsverknüpfung für die verschiedenen Drehrichtungen der eine vollgesteuerte Thyristorbrücke anspeisenden dreiphasigen Wechselspannung selbständig und ohne äussere Eingriffe richtig durchführt.

Die Aufgabe wird erfindungsgemäss dadurch gelöst, dass der Steuertransformator an der Speiseseite der Thyristorbrücke in Dreieck und sekundär in Stern geschaltet ist und dass die in jeder Phase zwischen der Sekundärseite des Steuertransformators und den Impuls-Steuersätzen liegenden Tiefpassfilter für die speisende Netzfrequenz eine Phasenverschiebung von 60° aufweisen.

Vorteilhaft ist, dass eine umfangreiche Elektronik zur Erfassung der Drehfeldrichtung und eine der Diodenmatrixen entfallen. Die Tiefpassfilter müssen immer zur Siebung von Hochfrequenzstörungen und von Oberwellen vorhanden sein. Durch die hier gewählte, viel grössere Phasenverschiebung von 60° kann zusammen mit der gewählten Schaltgruppe des Steuertransformators eine wesentlich vereinfachte Drehrichtungsunabhängigkeit erzielt werden.

Die Tatsache beruht darauf, dass die ODER-Verknüpfung zur Folgeimpulsbildung die Möglichkeit schafft, jene Gittersteuereinheit, die bei positiver Drehrichtung den Folgeimpuls an den Eingang des ODER-Gatters geliefert hat, bei negativer Drehrichtung des Hauptimpuls liefern zu lassen. Das Zusammenspiel des Steuertrafos und des nachgeschalteten Tiefpasses soll in der Weise vor sich gehen, dass eine bestimmte Gittersteuereinheit einem bestimmten Thyristor bei einer Drehrichtung einen Folgeimpuls, bei der entgegengesetzten jedoch einen Hauptimpuls liefert.

Nachstehend wird gezeigt, dass diese Forderung hinreichend ist, um sicherzustellen, dass bei einer, für eine bestimmte Drehrichtung funktionierenden Folgeimpulsverknüpfung, sich nach Veränderung der Drehrichtung wieder ein passendes Impulsmuster ergibt.

Wie bekannt, bedeutet eine Vertauschung der Anspeisung an zwei Klemmen eines Drehstromsystems eine Umkehr der Drehrichtung bei gleichbleibender Klemmenbezeichnung, was einen Umlauf desselben Zeigerdiagramms im Uhrzeigersinn bei gleicher Bezeichnung der Klemmenspannungen entspricht.

Hervorzuheben ist dabei, dass durch die Vertauschung des Drehsinns des Zeigerdiagramms eine bestimmte Spannung $U_1$, die einer anderen Spannung $U_2$ zuerst um einen Winkel vorgeeilt ist, dieser dann um denselben Winkel nacheilt. Die Schaltgruppe des Steuertransformators, die die Phasenlage der Filtereingangsspannungen zu den Eingangsspannungen der Drehstrombrücke festlegt, entspricht also einem gewissen Phasenwinkel dieser Spannungen zueinander, der bei Drehrichtungsumkehr sein Vorzeichen wechselt. Anders verhält sich die Phasenverschiebung der Filter: Sie drehen die angebotene Spannung unabhängig von der Drehrichtung immer um denselben Winkel $\varphi F$ derart, dass z. B. ein positiver Spannungsnulldurchgang am Filtereingang einen um $\varphi F$ in Richtung der fortschreitenden Zeit verschobenen positiven Spannungsnulldurchgang an seinem Ausgang bewirkt. Denkt man sich die Zeit nun statt nach rechts nach links fortschreitend, so wird ein negativer Spannungsnulldurchgang zu einem positiven, (bezüglich der Wirkungsweise der Gittersteuerbausteine, die bei positiven Nulldurchgängen ihre Zeitmarken auf 0° setzen, entspricht eine Drehrichtungsumkehr also einer Phasendrehung um 180°), weiterhin wird ein Abkommutierungspunkt zu einem natürlichen (Auf-) Kommutierungspunkt. Es zeigt sich, dass das für nach rechts fortschreitende Zeit notwendige Zündimpulsmuster nur um 60° elektrisch nach rechts verschoben zu werden braucht, um ein passendes Impulsmuster für nach links fortschreitende Zeit zu ergeben. Für nach rechts fortschreitende Zeit bedeutet aber die Verschiebung des Folgeimpulses um 60° nach rechts die Verschiebung auf den Abkommutierungspunkt. Dieser wird für nach links fortschreitende Zeit zum Aufkommutierungspunkt, der Zündimpuls also zum Hauptimpuls. Gelingt es aber, den Zündimpuls, den ein bestimmter Gittersteuerbaustein an einen bestimmten Zündverstärker bringt, durch geeignete Phasenverschiebungen zufolge geeigneter Schaltgruppe und Filterphasendrehung um 60° nach rechts zu verschieben, so muss das für alle Zündimpulse gelten, da die Schaltgruppe und Filterphasenverschiebungen ja für alle vorkommenden Spannungen gemeinsam wirksam sind, es wird also das für die veränderte Drehrichtung erforderliche Impulsmuster hergestellt.

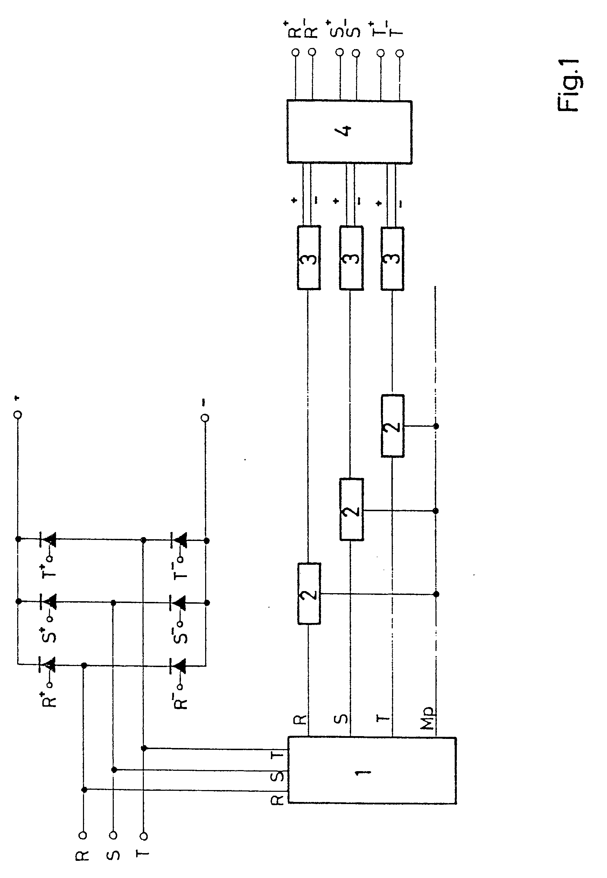

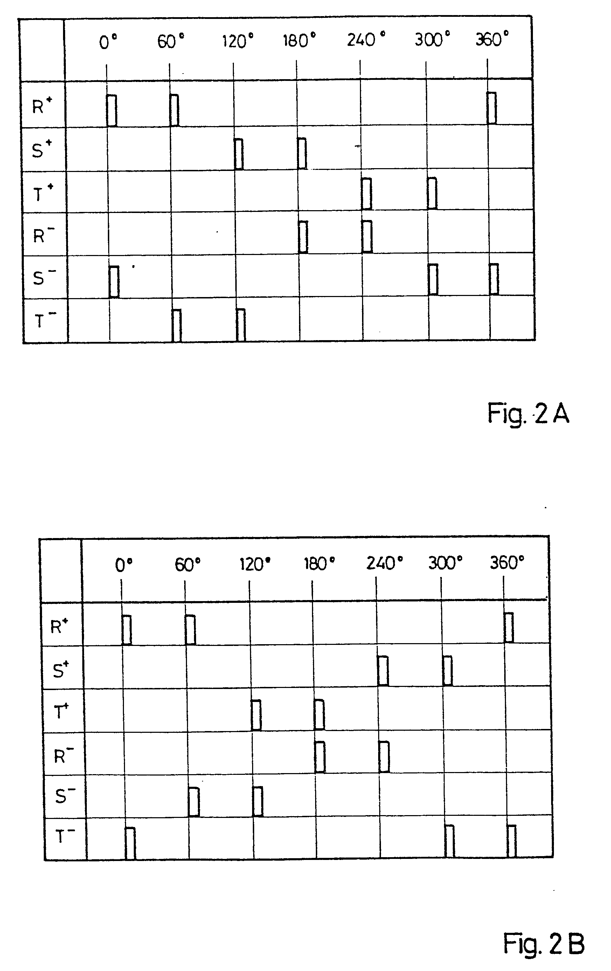

Die nähere Erläuterung der Erfindung erfolgt an Hand der Zeichnung. Fig. 1 zeigt das Prinzipschaltbild und Fig. 2 das Zeitdiagramm der Doppelzündimpulse.

In Fig. 1 erfolgt die netzseitige dreiphasige Speisung an den Klemmen R,S,T. Daran sind der Steuertransformator 1 und eine Ausführungsform einer vollgesteuerten Thyristorbrücke mit den Thyristoren $R^+$, $R^-$, $S^+$, $S^-$, $T^+$, $T^-$, angeschaltet. Der Steuertransformator 1 trennt galvanisch die Speiseseite von der Steuerelektronik. Die drei Tiefpassfilter 2 dienen zur Siebung störender Hochfrequenzeinstreuungen von Oberwellen. Durch die Dimensionierung auf eine Phasenverschiebung von 60° zusammen mit der Phasendrehung von 30° im Steuertransformator wird, wie sich auch mathematisch beweisen lässt, eine Drehrichtungsunabhängigkeit erzielt.

Der Ausgang der Tiefpassfilter 2 steuert die Impuls-Steuersätze 3 an, welche in jeder Steuerspannungsperiode zwei Impulse + bzw. – abgeben, die in einer Verknüpfungslogik 4 zu Doppelzündimpulsen $R^+$, $R^-$, $S^+$, $S^-$, $T^+$, $T^-$ zusammengefasst werden.

Fig. 2A zeigt das Zeitdiagramm der Doppelzündimpulse der Thyristoren $R^+$, $R^-$, $S^+$, $S^-$, $T^+$, $T^-$ für rechtsdrehendes Speisenetz und Fig. 2B das Zeitdiagramm für linksdrehendes Speisenetz. Die Doppelzündimpulse jedes Thyristors sind um 60° elektrisch versetzt.

**Patentanspruch**

Schaltungsanordnung zur folgerichtigen Doppelimpulszündung bei einer vollgesteuerten Thyristorbrücke für beide Drehfeldrichtungen, die von der die Thyristorbrücke anspeisenden, dreiphasigen Wechselspannung festgelegt sind, wobei ein Steuertransformator (1), drei Tiefpassfilter (2), drei Impuls-Steuersätze (3) und eine Verknüpfungslogik (4) vorgesehen sind, dadurch gekennzeichnet, dass der Steuertransformator (1) an der Speiseseite der Thyristorbrücke in Dreieck und sekundär in Stern geschaltet ist und dass die in jeder Phase zwischen der Sekundärseite des Steuertransformators (1) und den Impuls-Steuersätzen (3) liegenden Tiefpassfilter (2) für die speisende Netzfrequenz eine Phasenverschiebung von 60° aufweisen.

**Claims**

1. Circuit arrangement for the sequential double-pulse ignition in the case of a fully controlled thyristor bridge for both rotary field directions, which are established by the three-phase alternating voltage supplying the thyristor bridge, wherein a control transformer (1), three low-pass filters (2), three pulse control members (3) and a logic element (4) are provided, characterised in that the control transformer (1) is connected in delta formation on the generator side of the thyristor bridge and in star formation at the secondary and in that the low-pass filters (2) disposed in each phase between the secondary side of the control transformer (1) and the pulse control members (3) comprise a phase shift of 60° for the main frequency supplied.

## Revendication

Disposition de circuit pour l'allumage correct par impulsions doubles, dans un pont à thyristors entièrement commandé pour les deux sens du champ tournant, qui sont fixées par la tension alternative triphasée alimentant le pont à thyristors, comportant un transformateur de commande (1), trois filtres passe-bas (2), trois dispositifs de commande d'impulsions (3) et un circuit logique combinatoire (4), caractérisée par le fait que le transformateur de commande (1) est relié en triangle au côté d'alimentation du pont à thyristors et en étoile du côté secondaire et que les filtres passe-bas (2) situés dans chaque phase entre le côté secondaire du transformateur de commande (1) et les dispositifs de commande d'impulsions (3), présentent, pour la fréquence du réseau d'alimentation, un déphasage de 60°.

Fig.1

0017642

| | 0° | 60° | 120° | 180° | 240° | 300° | 360° |
|---|---|---|---|---|---|---|---|
| R⁺ | | | | | | | |
| S⁺ | | | | | | | |
| T⁺ | | | | | | | |
| R⁻ | | | | | | | |
| S⁻ | | | | | | | |
| T⁻ | | | | | | | |

Fig. 2 A

| | 0° | 60° | 120° | 180° | 240° | 300° | 360° |
|---|---|---|---|---|---|---|---|
| R⁺ | | | | | | | |
| S⁺ | | | | | | | |
| T⁺ | | | | | | | |
| R⁻ | | | | | | | |
| S⁻ | | | | | | | |
| T⁻ | | | | | | | |

Fig. 2 B